# EUROPÄISCHE PATENTSCHRIFT

(11) **EP 1 268 274 B1**
(45) Veröffentlichungstag und Bekanntmachung des Hinweises auf die Patenterteilung: **10.12.2008**
(21) Anmeldenummer: 01927653.4
(22) Anmeldetag: 07.02.2001
(51) Int. Cl.: B64D 15/12, F03D 1/06, B63B 59/00, H05B 6/80

(54) **KOMPAKTES MIKROWELLENTECHNISCHES SYSTEM ZUM ENTEISEN UND/ODER VORBEUGEN EINER VEREISUNG DER ÄUSSEREN OBERFLÄCHE VON METEOROLOGISCHEN EINFLÜSSEN AUSGESETZTEN HOHLRAUM- ODER SCHALENSTRUKTUREN**
COMPACT MICROWAVE SYSTEM FOR DEICING AND/OR PREVENTING ICING OF THE OUTER SURFACE OF HOLLOW OR SHELL STRUCTURES SUBJECT TO METEOROLOGICAL INFLUENCES
SYSTEME COMPACT A MICRO-ONDES SERVANT A DEGIVRER ET/OU A PREVENIR L'APPARITION DE GLACE SUR LA SURFACE EXTERIEURE DE STRUCTURES CREUSES OU EN COQUE EXPOSEES AUX CONDITIONS METEOROLOGIQUES

(30) Priorität: 03.04.2000 DE 10016261
(43) Veröffentlichungstag der Anmeldung: 02.01.2003
(73) Patentinhaber: Forschungszentrum Karlsruhe GmbH, 76133 Karlsruhe (DE)
(72) Erfinder: FEHER, Lambert, 76351 Linkenhein-Hochstetten (DE)
(74) Vertreter: Rückert, Friedrich
(86) Internationale Anmeldenummer: PCT/EP2001/001299
(87) Internationale Veröffentlichungsnummer: WO 2001/074661

(56) Entgegenhaltungen:
- WO-A-98/01340
- DE-A- 19 750 198
- US-A- 5 615 849
- US-A- 5 623 821

## Beschreibung

Die Erfindung betrifft formstabile Hohlraum- oder schalenartige Strukturen mit eingebautem kompaktem mikrowellentechnischem System zum Enteisen und/oder Vorbeugen einer Vereisung an der äußeren, meteorologischen Einflüssen ausgesetzten Oberflächen, die durch Luftanströmung meteorologischen Einflüssen ausgesetzt sind.

Der Ansatz von Eis an solchen Strukturen beeinträchtigt das Umströmungsverhalten der Luft empfindlich, was insbesondere in der Luftfahrt zu aerodynamisch problematischem Fehlverhalten führen kann.

Die Anstrengungen, die vereisungsgefährdete Fronten an solchen Strukturen eisfrei zu halten, sind mannigfaltig. Sie reichen vom Besprühen oder Bespülen der exponierten Oberflächen solcher Fronten mit einer die Eisbildung hemmenden Flüssigkeit, über das Anströmen der Innenflächen mit Warmluft bis zum ohmschen Beheizen solcher Zonen, elektrische Enteisungssysteme. Flüssigkeitsenteisung ist durch sein Reservoir an Flüssigkeit begrenzt und gilt zudem als unzuverlässig.

Die Bedingungen zur Eisbildung müssen unterdrückt werden. Das gelingt beim Enteisen mittels Flüssigkeit nur vorübergehend, insbesondere beim Verwenden von Enteisungsflüssigkeit am Boden vor dem Start. Der anhaftende Film reißt schon während der Startphase ab und lässt beim Durchgang des Flugzeugs durch vereisungsgefährdete Wolkenformationen ein nur zeitlich kurzes Sicherheitsfenster zu. Regen z.B. spült ein solches Mittel je nach Stärke am Boden früher oder später schon ab.

In der Luftfahrt ist gängige Technik im Flug, Tragflächen bzw. die aerodynamisch wichtigen Vorflügel (engl.: slat), bzw. die exponierten Fronten, Flügelnasen, dieser Bereiche mit von den Triebwerken entnommener Warmluft, in der Fachsprache Zapfluft, aus dem Inneren der Struktur her anzublasen. Der Temperaturübergang auf die Vorflügel ist von den thermodynamischen Strömungsverhältnissen und meterologischen Bedingungen in Abhängigkeit der Flughöhe, Außentemperatur, Fluggeschwindigkeit, Tröpfchengröße, lateralen Wolkenausdehnung, Wassergehalt etc. gegeben. Unter Berücksichtigung dieser Parameter wird die Effizienz eines Warmluftenteisungssystems auf ca. 30%-40% abgeschätzt. Diese Technik zeichnet sich durch eine hohe Leistungsentnahme und hohe Verluste in der Verrohrung auf dem Weg zum gefährdeten Bereich aus. In der Luftfahrttechnik, insbesondere in der modernen Triebwerkstechnologie ergeben sich Einschränkungen in der Entnahme von ausreichend heißer Warmluft aus den Mantelstromtriebwerken, so dass Warmluft nicht mehr beliebig entnommen werden kann.

Eine andere Technik ist das Verlegen von metallischen Netzen/Heizmatten in der Wand oder auf der Innenwand solcher Strukturen, in denen mit elektrischem Strom, also ohmsches Beheizen, solche Flächen nach Bedarf erwärmt oder warmgehalten werden. Das verlangt aufgrund des hohen Leitungsbedarfs das Verlegen von elektrischen Zuleitungen großen Querschnitts vom Bordgenerator bis zu den Anschlussleisten der Netze. Eine homogene Erwärmung, d.h. das Vermeiden lokaler Überhitzungen insbesondere in der Nähe der Kontaktleisten ist bei einer flächigen Bestromung stets ein Problem, dem sehr sorgfältige Aufmerksamkeit geschenkt werden muss, abgesehen vom erfahrungsgemäß schlechten Wärmetransport zur Problemfläche.

In der DE 197 45 621 C1 wird ein Enteisungsverfahren beschrieben, bei dem zu enteisende Flächen eine Dünnschicht mit hydrophoben Eigenschaften aus diamantartigem Kohlenstoff/ amorphem Kohlenwasserstoff haben, die bei Auftritt einer Eisbildung mit einer äußeren Infrarotstrahlungsquelle bestrahlt oder durch eine in der Fläche liegenden Heizmatte aufgeheizt und dadurch angeregt und erwärmt werden.

In der DE 197 50 198 C2 wird eine Technik zur Enteisung von Flugzeugen mit Mikrowellen beschrieben, die von einer zentralen, vom Enteisungsbereich weit entfernten Quelle im Flugzeugrumpf gespeist wird. Vereisungsgefährdete, strömungstechnisch bedeutsame Zonen am Flugzeug bestehen aus Verbundwerkstoffen deren dielektrische Bereiche für Mikrowellen oberhalb 20 GHz gut durchlässig sind. Zur Führung der Mikrowellen taugliche Hohlleiter, vergleichbar der heutigen Warmluftverrohrung, werden von einer Mikrowellenquelle im Flugzeugrumpf bis an diese Zonen im Innern herangeführt, wo dann die Mikrowelle auskoppelt und diese Zone durch Aufwärmung des Dielektrikums eisfrei hält oder durch Erwärmung der Grenzschicht der eventuell schon anliegenden Eisschicht diese rasch davon wieder befreit.

In der WO 98/01340 ist ein Verfahren und ein System für die Enteisung von Flugzeugtragflächen aus Verbundwerkstoffen beschrieben. Um Vereisen von Windmühlenflügeln aus Verbundwerkstoffen zu vermeiden, wird Mikrowellenenergie zur Erwärmung des Verbundwerkstoffes benutzt. Diese Energie wird von Mikrowellengeneratoren geliefert, die im Innern montiert sind und im Falle der Vereisungsgefahr durch das Auftreten klimatischer Bedingungen für die Vereisung eingeschaltet werden. Die Flügeloberfläche kann stellenweise mit einer mikrowellenreflektierenden Schicht bedeckt sein, wodurch sich die Mikrowelle auch durch Reflexion in den Flügelkammern fortpflanzt/ausbreitet. Zum ausgewählten Heizen können mehrere Generatoren kleinerer Leistung benutzt werden. Die Generatoren sind Magnetrone, wie sie aus der Haushaltsmikrowellenherdtechnik bekannt sind, die mit einer Frequenz von 2,45 GHz abstrahlen. Das entspricht einer Freiraumwellenlänge von 12,25 cm. Mit dieser Einrichtung können keine Wellenfronten eingestellt werden, die meteorologisch exponierten Kanten/Flächenbereiche gleich- oder wenigstens nahe kommen, zum einen wegen der großen Wellenlänge, zum andern wegen der Anordnung des oder der Mikrowellengeneratores/n.

Im Leichtkörperbau setzt sich mehr und mehr der Aufbau von Hohlkörper- oder Schalenstrukturen durch Prepreg, CFK- und GFK-Kompositteile durch. Allerdings besitzen solche Verbundwerkstoffe, wenn auch sehr formstabil/-steif und damit mit hoher mechanischer Festigkeit/ und Zähigkeit versehen, bei eine im Vergleich zu Metall sehr schlechte, anisotrope thermische Leitfähigkeit mit der Gefahr der Bildung von Wärmestaus und Überhitzung und damit der Gefahr der lokalen Delamination beim Anblasen mit heißer Luft, bzw. die Flugsicherheit betreffende starke Beschränkung der Möglichkeit, ausreichende Flächenleistungsdichten an der strömungszugewandten, potentiell eisbehafteten Fläche einbringen zu können.

Der Erfindung liegt die Aufgabe zugrunde, ein kompaktes, dezentrales Enteisungssystem für Hohl- oder Schalenkörperstrukturen, die der äußeren Luftanströmung in der Atmosphäre ausgesetzt und damit vereisungsgefährdet sind, zu entwickeln.

Die Aufgabe wird durch formstabile Hohlraum- oder schalenartige Strukturen mit eingebautem kompaktem mikrowellentechnischem System zum Enteisen und/oder Vorbeugen einer Vereisung an der äußeren, meteorologischen Einflüssen ausgesetzten Oberfläche gemäß den kennzeichnenden Merkmalen des Anspruchs 1 gelöst. Dabei sind die Wände der Hohlraumstrukturen aus ausgehärteten, thermoplastischen oder duroplastischen Verbundwerkstoffen mit dielektrischen Eigenschaften, ggf. in Kombination mit anderen Werkstoffen wie Schäumen, deren Fasergebilde aus Kohlenstofffasern, Glasfasern, Polymerfasern, Polyamidfasern, Polyethylenfasern oder Aramidfasern. Die äußeren, meteorologischen Einflüssen ausgesetzten Oberflächen sind mit einer metallischen Haut als Blitzschutz überzogen und das mikrowellentechnischem System beseht aus mindestens einer Mikrowellenquelle, die in ihrer Leistung steuerbar, gepulst oder kontinuierlich, also pulsbreitengeregelt, betrieben im Frequenzbereich von 900 MHz bis 20 GHz monochrom abstrahlt,

Die kennzeichnenden Merkmale sind:
Zumindest die vereisungsgefährdete Front der jeweiligen Struktur hat einen laminierten Aufbau, der aus einem Formkörper als Trägerstruktur aus dielektrischem Verbundmaterial einer der Beanspruchung angepassten Schub-, Druck und Biegefestigkeit besteht. Die metallische Haut, die der anströmenden Luft unmittelbar ausgesetzt ist, ist in Verbindung mit anderen anstoßenden oder unmittelbar angrenzenden Baustrukturen mit metallischer Oberfläche elektrisch leitend verbunden, so dass ein metallisch umschlossener Hohlraum besteht.

Im Hohlraum oder in Kammern eines jeden solchen Formkörpers mindestens ist ein für sich alleine betreibbares Mikrowellensystem eingebaut ist, das aus einer Mikrowellenquelle mit Netzteil und Auskoppeleinrichtung aus Hohlleiter und Auskoppelstruktur besteht.

Die steuerbare Mikrowellenquelle ist im Innern der Hohl/Schalenkörperstruktur unter Berücksichtigung der am Mikrowellenausgang angeflanschten Auskoppeleinrichtung unmittelbar oder in nächster möglicher Nähe hinter der vereisungsgefährdeten oder eisfrei zu haltenden Außenfront aufgestellt. Die mechanisch stabilen Hohl-/Schalenkörperstrukturen bestehen einerseits aus CFK-Material oder andrerseits aus GFK-Material oder Prepreg-Verbundmaterial oder sind eine Zusammensetzung aus beiden. Die äußere Oberfläche der Struktur besteht aus einem Metallfilm bzw. einer Metallhaut, zumindest ist die strömungstechnisch exponierte Außenfläche mit einer solchen überzogen, die dann mit angrenzenden metallischen Strukturen/Flächen an ihrem Rand durchgehend verbunden ist, so dass diese Hohl- oder Schalenkörper Mikrowellen- bzw. hochfrequenzdicht ist und keine elektromagnetische Abstrahlung in den Außenraum ermöglicht.

Die Auskoppelstruktur ist im Innern des Formkörpers entlang zur äußeren Anströmfront derart aufgestellt ist, dass die ausgekoppelte Mikrowelle innen entlang dieser mit einer Wellenfront oder nahezu mit einer Wellenfront auf die freie innere Oberfläche des Verbundmaterials auftrifft, in es penetriert und den dortigen Frontbereich des Verbundmaterialvolumens durch die Mikrowelleneinwirkung über Volumenheizung derartig erwärmt, dass das Verbundmaterial einerseits unter der Einwirkung der Mikrowelle an jeder Stelle weit unterhalb der Delaminationstemperatur T_{DL} von etwa 130°C des Verbundmaterials bleibt und andererseits an der Schnittfläche Formkörper/Metallhaut eine vorgegebene Flächenleistungsdichte bis über 60 kW/m² bei anhaftendem Klareis gefahrlos bestehen kann, die die Metallhaut auf einer vorgebbaren, den meteorologischen Anforderungen entsprechenden Temperatur von +10°C bis +70°C und Abtaugeschwindigkeit hält. Innerhalb dieses Temperaturbereichs kommt es auf der luftangeströmten Front bei eingeschaltetem Mikrowellensystem mit Sicherheit zu keiner Eisbildung oder angesetztes Eis taut an der Anströmfront an der Berührfläche mit Einschalten des Mikrowellensystem an oder ab. Schon mit einer thermischen Flächenleistungsdichte bis zu 46 kW/m² wird anhaftendes Eis an seiner Grenzschicht zur Struktur hin aufgetaut und löst sich damit ab oder wird von der Luftströmung vollends abgerissen.

Die Auskoppelstruktur der Auskoppeleinrichtung ist ein an die Mikrowellenquelle/n angeflanschter Hohlleiter, der zur Bildung der erforderlichen Mikrowellenfront entsprechende Auskoppelöffnungen in unterschiedlich der Größe und Abstand hat, um entlang des Hohlleiters eine gleich bleibende Leistungsauskoppelung zu ermöglichen. Die Abstrahlungscharakteristik ist derart beschaffen, dass entlang der Flügelkontur möglichst weitgehend gleiche Phasenfronten anliegen, deren Amplitudenbelag die lokale erforderliche Enteisungsflächenleistung bereitstellt. So können in der Flügelnase weitaus höhere (bis 60kW/m²) Flächenleistungsdichten wünschenswert sein, in den rückwärtigen Bereichen liegen die Anforderungen bis zum Faktor 10 niedriger (Anspruch 2).

Zum Schutz der Mikrowellenquelle ist dieselbe in Ihrer Durchgangs- und Sperrdämpfung über Zirkulatoren abgeschlossen (Anspruch 3).

Je nach maximal geforderter Mikrowellenleistung ist die Mikrowellenquelle ein Klystron oder Magnetron oder ein "Extended Interaction Oscillator", EIO, (Anspruch 4).

Die Mikrowellenleistung tritt dämpfungsarm an der Auskoppeleinrichtung aus und erwärmt die umgebende Schalenstruktur, die als dissipativer Resonator sehr niedriger Güte wirkt, selektiv. Daher ist der Hohl- oder Wellenleiter mit Auskoppeleinrichtung aus einem elektrisch gut leitenden Metall oder aber, falls Gewichtseinsparungen das erfordern aus Verbundwerkstoff, der von einem mikrowellendichten Metallnetz ummantelt oder damit ausgelegt ist (Ansprüche 5 und 6).

Ein solches mikrowellentechnisches Enteisungssystem kann sich in eisfrei zu haltenden Einrichtungen/Aufbauten eines Schiffes oder eines Zuges oder eines Straßenverkehrsmittel oder sonstigen, mit allen meteorologischen Bedingungen fertig zu werdenden Hohlkörperstruktur befinden (Anspruch 7).

Sicherheitstechnisch springt die Bedeutung eines solchen Enteisungssystems in der Luftfahrttechnik ins Auge. Flugzeuge und Helikopter benötigen unbedingt aerodynamisch geeignete Gestalt, insbesondere für den Auftrieb und die Steuerung verantwortliche Strukturen wie Tragflächen, Seiten- und Höhenruder und der Rand des Triebwerkseinlasses (Ansprüche 8 bis 11).

Bei größeren Flugzeugen, die im auftriebsrelevanten Bereich der angeströmten Tragfügelfronten sogenannte Vorflügel aufweisen, ist ein zuverlässig wirkendes Enteisungssystem für die stete Flugsicherheit unerlässlich (Anspruch 12).

Ein weiter wichtiges Einsatzfeld ist die Energieerzeugung mit Windkraftanlagen, die riesige Rotorblätter haben und sich ständig Bodenwetterlagen ausgesetzt sind. Um an den Rotorblättern Vereisung zu verhindern, sitzt die Mikrowellenquelle im Zentrum des Flügelrades, von der aus dann je ein Hohlleiter mit Auskoppelstruktur in den Flügel zu den vereisungsgefährdeten Fronten hineinreicht (Anspruch 13).

Die mikrowellentechnischen Baukomponenten sind unmittelbar am Wirkungsort. Es ist lediglich eine Netzzuleitung mit Steuerleitungen für ein solches Enteisungssystem notwendig. Lange Hohl- bzw. Wellenleiterführungen entfallen.

Mit dem mikrowellentechnischen Enteisungssystem wird eine Steigerung der Flugsicherheit durch hohe Geschwindigkeit des De/Anti-Icing Systems erreicht. Im sog. Routine Anti-Icing Betrieb ist ein niedriger Leistungsbedarf erforderlich. Zudem sind auftretende Vereisungsbedingungen beherrschbar, die konventionell nicht angegangen werden können.

Durch die Verwendung von Verbundwerkstoffen für den Vorflügel werden substantielle Gewichtseinsparungen von über 30 % gegenüber der heutigen Metallbauweise erreicht. Neben der prioritären Sicherheit wird dadurch die Wirtschaftlichkeit durch Gewichtseinsparung, bzw. Treibstoffeinsparung erheblich gesteigert. Zudem kann am Boden der Einsatz der mit Unsicherheiten behafteten und die Umwelt stark belastenden Enteisungsflüssigkeit reduziert, eigentlich vermieden werden.

Die Mikrowellentechnologie senkt signifikant die auftretenden Temperaturen in der laminierten Struktur im Vergleich zur konventionellen Enteisung mit Warmluftanblasen, daher sind weitaus höhere Flächenleistungen für bestimmte Enteisungssituationen an der Außenhaut ermöglicht, bzw. in jedem Fall ein das Verbundmaterial und die Struktur thermisch nicht belastender Betrieb die Regel. Selbst heute von den bestehenden Systemen nicht bewältigbare anhaftende Klareissituationen werden ohne Gefahr der Überhitzung/Delamination des Verbundwerkstoffes beherrscht.

Im Falle der Vorflügelenteisung beispielsweise entfallen geführte Metallrohrleitungen in der Tragfläche sowie Piccolorohrsysteme, wie sie heute für das Warmluftanblasen installiert sind. Das bringt weitere erhebliche Gewichtseinsparungen. Darüber hinaus ist der Vorflügel als Modul für technische Wartung am Flughafen leicht austauschbar - ein Vorteil im zeitlichen Reparaturablauf.

Der Ausfall eines Enteisungsvorflügels führt alles in allem nur zu einer geringen Einbuße in der Leistungsfähigkeit, da die autarken, übrigen Vorflügelsysteme von dem Ausfall eines Systems nicht betroffen sind und unabhängig weiterarbeiten - Redundanz. Beim konventionellen System muss über eine Notversorgungsleitung Warmluft von der anderen Tragfläche abgezogen werden, was zu einer erheblichen Leistungsbeeinträchtigung des Gesamtenteisungssystemes führt.

Es ist hier hervorzuheben, dass die gesamte elektrische Leistung zu 100% in wirkende Enteisungsleistung umgesetzt und an die metallische Vorflügelaußenhaut abgeführt wird.

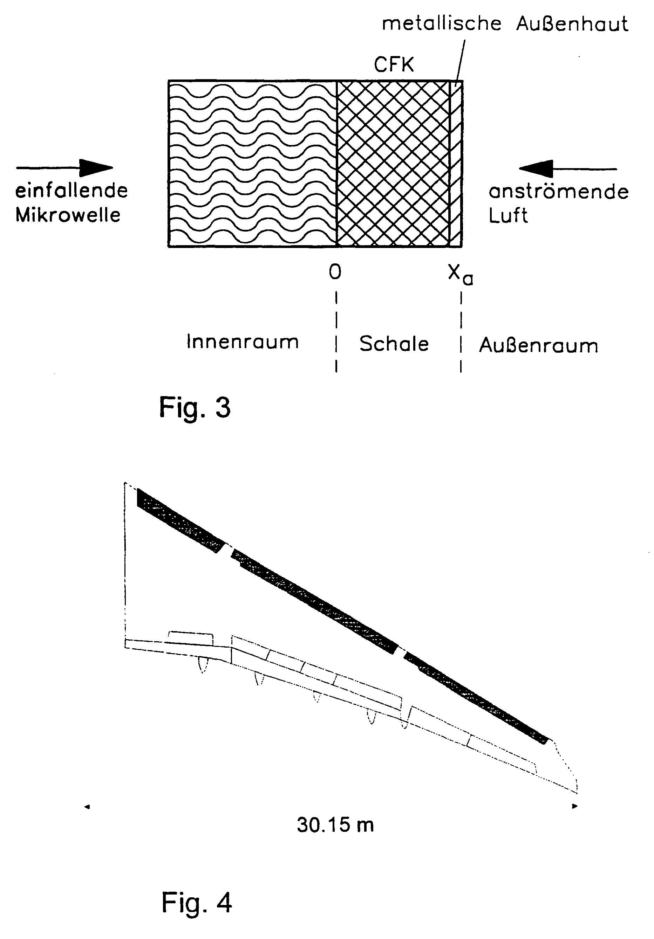

Entlang der Vorflügelkontur sind stark unterschiedliche Flächenleistungsdichten erforderlich; der höchste Bedarf liegt an der Flügelnase selber. Um, wie in der Fliegersprache ausgedrückt wird, Runback Vereisung: von der Vordernase nach hinten rutschende und wieder anfrierende Eismassen, zu verhindern, muss auch der rückwärtige Teil des Vorflügels erwärmt werden. Der erforderlichen Verteilung entsprechend wird ein Feldbelag entlang der Vorflügelkontur durch eine mikrowellentechnisch optimierte Hohlleiterauskopplung mit entsprechender Abstrahlcharakteristik erzeugt (optimale Leistungsanpassung an die Vorflügelgeometrie, siehe Figur 4).

Das gesamte System ist, mikrowellentechnisch gesehen, geschlossen und elektromagnetisch versiegelt. Das CFK/Kompositmaterial ist von einer schirmenden metallischen Haut, die primär ihre Bedeutung als Blitzschutz aufweist, umgeben. Es dringt keine Feldwirkung aus dem Vorflügelsystem nach außen. Die Geschlossenheit des Vorflügels - Warmluft benötigt Austrittskanäle - hat aerodynamisch insbesondere noch den Vorteil, weitgehende laminare Strömungsverhältnisse an der Grenzschicht einstellen zu können und störende Wirbelbildung zu vermeiden.

Das Mikrowellenenteisungssystem ist Puls-Breiten-geregelt betreibbar, so dass Vereisung profilaktisch von kleiner Wärmeleistungsanforderung bis hin zur Klareisentfernung mit höchster Wärmeleistungsanforderung beherrscht wird.

Das mikrowellentechnische Enteisungssystem arbeitet verlustfrei, die dem Netz entnommene Leistung und in der Auskoppeleinrichtung geführten Mikrowelle wird vollständig zur Enteisung bzw. Eisfreihaltung umsetzt. Die Leistungsfähigkeit eines solchen Systems tritt noch deutlicher hervor, weil bei eingetretener Vereisung in kurzer Zeit das Eis von der exponierten Oberfläche durch Antauen der Grenzschicht abgelöst werden kann.

Das mikrowellentechnische Enteisungssystem, das aus mindestens einer der im folgenden dargestellten Einheit besteht, wird anhand der Zeichnung näher erläutert. Die Zeichnung besteht aus fünf Figuren. Es zeigt:
Figur 1 den schematischen Aufbau der Enteisungseinrichtung,
Figur 2 den Schnitt einer Momentaufnahme der Feldverteilung im Vorflügel,
Figur 3 den Situationsausschnitt,
Figur 4 die Einrichtung an der Tragfläche,
Figur 5 Temperaturverteilung

Das mikrowellentechnische Enteisungssystem ist vielfältig und weitläufig verwendbar. Neben dem Einsatz zu Lande und auf dem Wasser wird seine Bedeutung in der Luftfahrt am eindrücklichsten. Es wird daher jetzt am Beispiel des Einbaus in den Vorflügel einer Flugzeugtragfläche weiter erläutert.

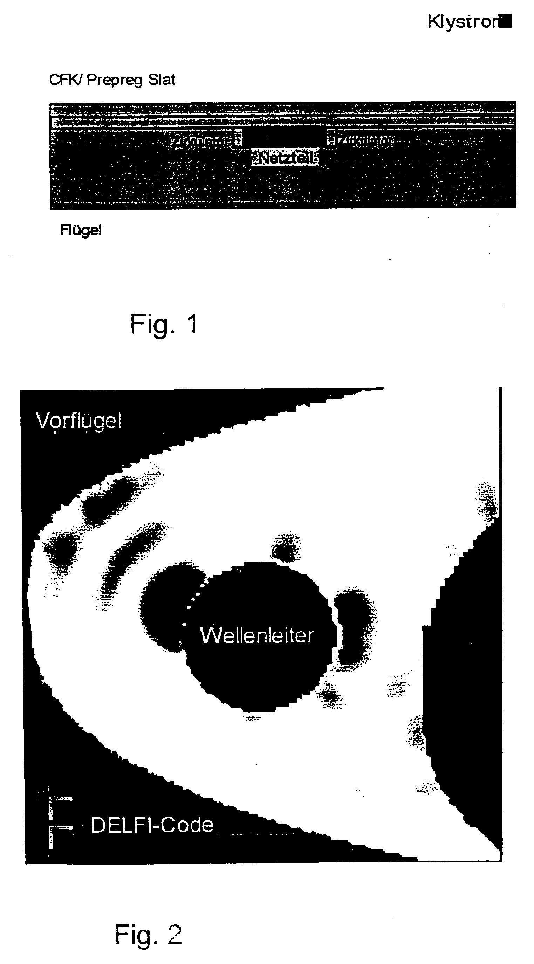

Figur 1 zeigt den Längsschnitt durch einen der Vorflügelabschnitte, wie sie in Figur 4 durch die graue Unterteilung der Anströmkante einer Flugzeugtragfläche angedeutet sind. Im Vorflügelinnern ist parallel zur Anströmkante des Vorflügels aus CFK-Material (Prepreg Slat) die rohrförmige Auskoppeleinrichtung/Hohlleiter für die Mikrowelle montiert. Die resultierende Wellenfront wird durch die aus den Auskoppelöffnungen entlang des Hohlleiters ausgekoppelten Einzelwellen durch Überlagerung erzeugt. Hier sind Hohlleiter und Auskoppeleinrichtung eins und direkt an die Mikrowellenquelle, die ein Klystron ist, angebaut. Die Querschnittssituation zeigt Figur 2. Darin ist nur der Vorflügel samt Auskoppeleinrichtung teilweise gezeigt. Die in Figur 1 noch angedeutete Tragfläche ist nicht mehr mit eingezeichnet, wie auch das Klystron samt Netzteil.

Figur 2 zeigt deutlich die dunkelgraueren Bereiche der Feldverteilung im Innern des Vorflügels im Bereich der aerodynamisch wichtigen Anströmkante, die zurückweichend heller werden. Damit wird angedeutet, wo die Bereiche starker und weniger starker Wärmeerzeugung im laminierten Material sind. Da der Vorflügel insgesamt einen geschlossenen Innenraumraum und auch abgeschottete Innenräume hat, in denen jeweils mindestens ein Enteisungssystem sitzt, herrscht im Bereich der Anströmfront große Wärmeeinwirkung, die in Strömungsrichtung abnimmt und in der erforderlichen Form vorhanden ist. Zusammen mit der Wärmeentwicklung durch die Wärmeerzeugung im CFK-Material selber und durch den Betrieb der Mikrowellenquelle wird der gesamte Vorflügel derartig auf Temperatur gehalten, dass sich ein Eisansatz auf der Außenfläche auch nicht bei Anwesenheit extrem unterkühlter Wassertropfen, sog. super cooled droplets, ausbilden kann.

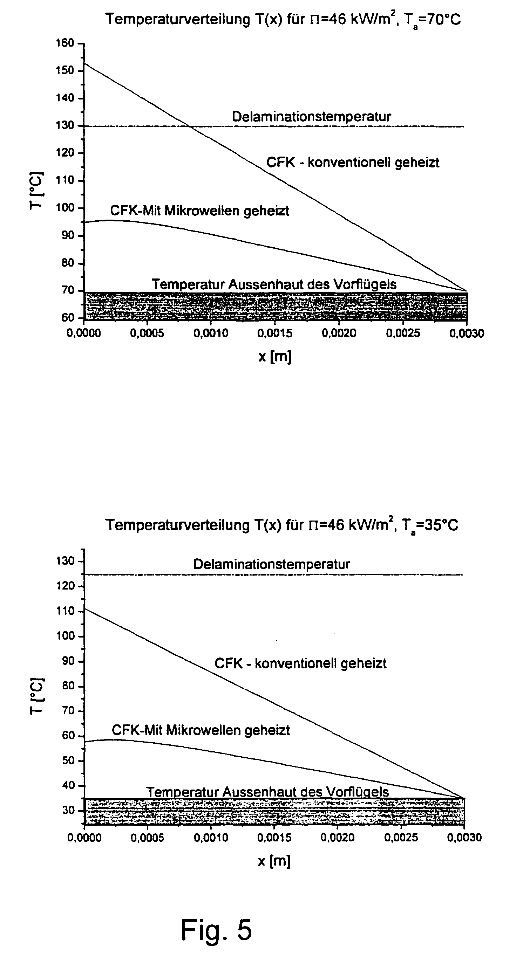

In Figur 5 sind zwei Betriebsarten mit Ihrer thermischen Auswirkung in der Wand des Vorflügels in der Anströmfront dargestellt, und zwar oben vorliegender Klareisenteisung mit hoher Abtaugeschwindigkeit und unten bei vergleichbarer Abtaubedingung, aber bei niedrigerer Abtaugeschwindigkeit, nur 35°C Außenhauttemperatur. Verglichen wird jeweils bei gleicher Vorflügelgeometrie die konventionelle Heizung, Wärmeeinbringung mit Warmluftanblasen der Innenwand, - gerade Linie im jeweiligen Schaubild "CFK konventionell geheizt" - und die CFK-Aufwärmung mit Mikrowelle "CFK mikrowellenbeheizt". Die Wand der Vorflügel-Hohlkörperstruktur ist im Bereich der Anströmung 3 mm dick. Die Wand besteht im wesentlichen aus dem CFK-Material und der dünnen, aufliegenden metallisierten Außenhaut (siehe Schnitt Figur 1). In beiden Diagrammen ist die Delaminationstemperatur von 130°C des CFK-Materials als strichpunktierte Linie eingetragen, die die Erwärmungsproblematik mit konventioneller Erwärmung vergleichend hervornebt. Bei einer beispielhaften Aufwärmung der Außenhaut auf 60 bis 70°C, schnelles Abtauen - oberes Diagramm - und einer Flächenleistungsdichte von 46 kW/m² muss mit einer Warmlufttemperatur von mindestens 150° bis 160°C die CFK-Innenwand des Vorflücels angeblasen werden, um bei gleicher erforderlicher Flächenenteisungsleistung an der Außenhaut eine vergleichbare übergangstemperatur Eis/Luft, Abtaugeschwindigkeit zu erzeugen. Im Vergleich wird bei der Mikrowellenerwärmung an der Innenwand lediglich eine maximale Temperatur von 95°C erreicht. Im konventionellen Fall wird die Delaminationstemperatur T_{DL} ganz deutlich und nahezu bis in 1 mm Tiefe überschritten, d. h. der Vorflügel beginnt sich strukturell an der Innenoberfläche aufzuweichen und bei fortschreitendem Betrieb zu zerstören. Die Mikrowellenerwärmung bleibt bei diesem Fall immer noch 35°C unterhalb der kritischen Delaminationstemperatur, d. h. hier treten keine strukturellen Beeinträchtigungen auf.

Das untere Diagramm stellt den Betrieb bei geringerer Abtaugeschwindigkeit, Außenhaut auf 35°C, dar. Die Vorflügelaußenhaut wird auf einer Temperatur von 35°C gehalten. Zwar wird jetzt beim konventionellen Heizen die Delaminationstemperatur nicht mehr überschritten, die Temperatur an der inneren Oberfläche beträgt jetzt 110°C, kommt aber damit der Zerstörungstemperatur sehr nahe. Mit der Mikrowellenerwärmung wird gerade eine Maximaltemperatur an der Innenwand von nur 60°C erreicht. Es liegt damit keinerlei thermische Belastung des laminierten Vorflügels durch die Erwärmung mit Mikrowelle vor.

Die signifikanten Temperaturerniedrigungen bei Verwendung von Mikrowellen im Vergleich zur konventionellen Erwärmung bei sonst gleichen Betriebs- und Leistungsanforderungen sind darauf zurückzuführen, dass ein instantaner volumetrischer Leistungseintrag durch die Beaufschlagung im ersten Drittel des Laminates durch Penetration der Welle erfolgt, und die Leistung dort ohne die Notwendigkeit eines wärmeleitungsabhängigen Gradientriebes eingebracht wird. Von dort fließt die eingebrachte Leistung über Wärmeleitung zur Außenhaut. Durch die Volumenheizung sind zudem sehr hohe Heizraten möglich, um die Vorflügelaußenhaut auf die entsprechende Abtautemperatur und erforderliche Flächenleistungsdichte zu bringen. Das zeigt eine hohe Dynamik für alle eventuellen Situationen.

## Patentansprüche

1. Formstabile Hohlraum- oder schalenartige Strukturen mit eingebautem kompaktem mikrowellentechnischem System zum Enteisen und/oder Vorbeugen einer Vereisung an der äußeren, meteorologischen Einflüssen ausgesetzten Oberfläche, wobei die Wände der Hohlraumstrukturen aus ausgehärteten, thermoplastischen oder duroplastischen Verbundwerkstoffen mit dielektrischen Eigenschaften, ggf. in Kombination mit anderen Werkstoffen wie Schäumen, deren Fasergebilde aus Kohlenstofffasern, Glasfasern, Polymerfasern, Polyamidfasern, Polyethylenfasern oder Aramidfasern sind, und an den äußeren, meteorologischen Einflüssen ausgesetzten Oberflächen mit einer metallischen Haut als Blitzschutz überzogen sind, und das mikrowellentechnischem System aus mindestens einer Mikrowellenquelle besteht, die in ihrer Leistung steuerbar, gepulst oder kontinuierlich betrieben im Frequenzbereich von 900 MHz bis 20 GHz abstrahlt,
**dadurch gekennzeichnet, dass:**
zumindest die vereisungsgefährdete Front der jeweiligen Struktur einen laminierten Aufbau hat, der aus einem Formkörper als Trägerstruktur aus dielektrischem Verbundmaterial einer der Beanspruchung angepassten Schub-, Druck und Biegefestigkeit besteht, und die metallische Haut, die der anströmenden Luft unmittelbar ausgesetzt ist, in Verbindung mit anderen anstoßenden oder unmittelbar angrenzenden Baustrukturen mit metallischer Oberfläche elektrisch leitend verbunden ist, so dass ein metallisch umschlossener Hohlraum besteht,
im Hohlraum oder in Kammern eines jeden solchen Formkörpers mindestens ein für sich alleine betreibbares Mikrowellensystem eingebaut ist, das aus einer Mikrowellenquelle mit Netzteil und Auskoppeleinrichtung aus Hohlleiter und Auskoppelstruktur besteht,
die Auskoppelstruktur im Innern des Formkörpers entlang zur äußeren Anströmfront derart aufgestellt ist, dass die ausgekoppelte Mikrowelle innen entlang dieser mit einer Wellenfront oder nahezu mit einer Wellenfront auf die freie innere Oberfläche des Verbundmaterials auftrifft, in es penetriert und den dortigen Frontbereich des Verbundmaterialvolumens durch die Mikrowelleneinwirkung über Volumenheizung derartig erwärmt, dass das Verbundmaterial einerseits unter der Einwirkung der Mikrowelle an jeder Stelle weit unterhalb der Delaminationstemperatur von etwa 130°C des Verbundmaterials bleibt und andererseits an der Schnittfläche Formkörper/Metallhaut eine vorgegebene Flächenleistungsdichte bis über 60 kW/m² bei anhaftendem Klareis gefahrlos bestehen kann, die die Metallhaut auf einer vorgebbaren, den meteorologischen Anforderungen entsprechenden Temperatur von +10°C bis +70°C und Abtaugeschwindigkeit hält, bei der es auf der luftangeströmten Front bei eingeschaltetem Mikrowellensystem mit Sicherheit zu keiner Eisbildung kommt oder angesetztes Eis an der Anströmfront an der Berührfläche mit Einschalten des Mikrowellensystem an-/abtaut.

2. Formstabile Hohlraum- oder schalenartige Strukturen mit eingebautem kompaktem mikrowellentechnischem System nach Anspruch 1,
**dadurch gekennzeichnet, dass**
die Auskoppelstruktur aus dem an die Mikrowellenquelle oder die Mikrowellenquellen angeflanschten Hohlleiter besteht, der entlang seiner Mantelfläche, zur Anströmkante gerichtete Auskoppelöffnungen hat, aus denen jeweils Wellen auskoppeln, die sich zu der geforderten Wellenfront überlagern.

3. Formstabile Hohlraum- oder schalenartige Strukturen mit eingebautem kompaktem mikrowellentechnischem System nach Anspruch 2,
**dadurch gekennzeichnet, dass**
die Mikrowellenquelle über Zirkulatoren in ihrer Durchgangs- und Sperrdämpfung mit der mikrowellenankoppelnden Verbundstruktur als Verbraucher angepaßt abgeschlossen ist.

4. Formstabile Hohlraum- oder schalenartige Strukturen mit eingebautem kompaktem mikrowellentechnischem System nach Anspruch 3,
**dadurch gekennzeichnet, dass**
die Mikrowellenquelle, die monochromatisch abstrahlent, orientiert an der abzugebenden Leistung im vorgesehenen Frequenzbereich, ein Klystron oder ein Magnetron oder ein Extended Interaction Oscillator, EIO, ist.

5. Formstabile Hohlraum- oder schalenartige Strukturen mit eingebautem kompaktem mikrowellentechnischem System nach Anspruch 4,
**dadurch gekennzeichnet, dass**
die Hohlleiter und Auskoppelstrukturen elektrisch gut leitende, metallische Wände haben.

6. Formstabile Hohlraum- oder schalenartige Strukturen mit eingebautem kompaktem mikrowellentechnischem System nach Anspruch 4,
**dadurch gekennzeichnet, dass**
die Hohlleiter und Auskoppelstrukturen aus leichtem Aluminium oder auch gewichtsoptimiert aus CFKKompositmaterial sind, die jeweils mit einem dünnen Netz aus elektrisch gut leitenden, metallischen Material der Maschenweite ummantelt sind, durch die hindurch die zu leitende Mikrowelle nicht unerwünscht entfleucht.

7. Formstabile Hohlraum- oder schalenartige Strukturen mit eingebautem kompaktem mikrowellentechnischem System nach den Ansprüchen 4 und 6,
**dadurch gekennzeichnet, dass**
ein solches in den Strukturen von vereisungsgefährdeten, von der Luft angeströmten und von Gischt besprühten Fronten eins Schiffes befindet.

8. Formstabile Hohlraum- oder schalenartige Strukturen mit eingebautem kompaktem mikrowellentechnischem System nach den Ansprüchen 4 und 6,
**dadurch gekennzeichnet, dass**
ein solches in wenigstens einer der aerodynamisch wichtigen Strukturen von von der Luft angeströmten, eisfrei zu haltenden Fronten eines Fluggerätes, wie eines Flugzeugs oder eines Helikopters, befindet.

9. Formstabile Hohlraum- oder schalenartige Strukturen mit eingebautem kompaktem mikrowellentechnischem System nach Anspruch 8,
**dadurch gekennzeichnet, dass**
sich ein solches in den für den Auftrieb relevanten Bereichen in den Tragflächen hinter den angeströmten Fronten befindet.

10. Formstabile Hohlraum- oder schalenartige Strukturen mit eingebautem kompaktem mikrowellentechnischem System nach Anspruch 8 oder 9,
**dadurch gekennzeichnet, dass**
sich ein solches in den für die Lenkung des Flugzeugs relevanten Bereichen im Höhen- und/oder Seitenruder hinter den angeströmten Fronten befindet.

11. Formstabile Hohlraum- oder schalenartige Strukturen mit eingebautem kompaktem mikrowellentechnischem System nach Anspruch 8 oder 10,
**dadurch gekennzeichnet, dass**
sich ein solches hinter der von Luft angeströmten ringförmigen Front des Triebwerkmantels am Triebwerkseingang befindet.

12. Formstabile Hohlraum- oder schalenartige Strukturen mit eingebautem kompaktem mikrowellentechnischem System nach Anspruch 9,
**dadurch gekennzeichnet, dass**
ein solches im jeweiligen Vorflügel der Tragflächen eingebaut ist.

13. Formstabile Hohlraum- oder schalenartige Strukturen mit eingebautem kompaktem mikrowellentechnischem System nach Anspruch 9,
**dadurch gekennzeichnet, dass**
ein solches in einem Rotorblatt einer Windkraftanlage eingebaut ist.

## Claims

1. Dimensionally stable hollow body structures or shell-like structures with built-in compact technical microwave system for de-icing and/or preventing the formation of ice on an outside surface exposed to meteorological influences, wherein the walls of the hollow body structures are produced from age hardened thermoplastic or thermosetting plastic composite materials with dielectric characteristics, where applicable in combination with other substances such as foams, the fibre structure of which is produced from carbon fibres, glass fibres, polymer fibres, polyamide fibres, polyethylene fibres or aramid fibres, and are coated on the outside surfaces that are exposed to meteorological influences by means of a metal skin as lightning protection, and the technical microwave system comprises at least one microwave source, which has a power output radiating in a controllable, pulsed or continuously operated manner within the frequency range of between 900 MHz and 20 GHz,
**characterised in that** at least the front that is in danger of icing up of the respective structure has a laminated design, which consists of a moulded body as carrier structure produced from dielectric composite material with a shear strength, pressure resistance and bending strength adapted to the load, and the metal skin, which is exposed directly to the air flow, in conjunction with other abutting or directly adjacent constructions is connected in an electrically conducting manner to the metal surface such that there is a metallically surrounded hollow space,
at least one microwave system that is operable independently is built into the hollow space or into chambers of one such moulded body, the said microwave system comprising a microwave source with power source and uncoupling device produced from hollow conductor and uncoupling structure,
the uncoupling structure in the interior of the moulded body is set up in such a manner along the outside front that faces the air flow that the uncoupled microwave inside along the said front facing the air flow contacts the free inside surface of the composite material with a wave front or almost with a wave front, penetrates it and heats the front region of the composite material volume **in that** region through the effect of the microwave by means of volumetric heating in such a manner that the composite material, on the one hand, under the effect of the microwave remains in all places far below the delamination temperature of the composite material of approximately 130°C and, on the other hand, at the interface between the moulded body and the metal skin, it is possible to have a predetermined surface power density of up to in excess of 60 kW/m² with adhering clear ice without any danger, which keeps the metal skin at a predeterminable temperature of between +10°C and +70° corresponding to the meteorological requirements and at a speed of thaw, at which there is certainly no ice formed on the front facing the air flow when the microwave system is activated or any ice attached to the front facing the air flow begins to defrost or thaw at the contact face when the microwave system is activated.

2. Dimensionally stable hollow body structures or shell-like structures with in-built compact technical microwave system according to claim 1,
**characterised in that** the uncoupling structure comprises the hollow conductor, which is flange-connected to the microwave source or to the microwave sources and has uncoupling openings along its surface area directed towards the edge that faces the air flow, from each of which uncoupling openings waves uncouple, the said waves being superimposed to form the required wave front.

3. Dimensionally stable hollow body structures or shell-like structures with in-built compact technical microwave system according to claim 2,
**characterised in that** the microwave source is closed in an adapted manner via circulators in its passage and blocking attenuation to the microwave-coupling composite structure as consumer.

4. Dimensionally stable hollow body structures or shell-like structures with in-built compact technical microwave system according to claim 3,
**characterised in that** the microwave source, which radiates in a monochromatic manner, oriented to the power to be output in the frequency range provided, is a klystron or a magnetron or an extended interaction oscillator (EIO).

5. Dimensionally stable hollow body structures or shell-like structures with in-built compact technical microwave system according to claim 4,
**characterised in that** the hollow conductor and uncoupling structures have metal walls that are good electrical conductors.

6. Dimensionally stable hollow body structures or shell-like structures with in-built compact technical microwave system according to claim 4,
**characterised in that** the hollow conductor and uncoupling structures are produced from light aluminium or also, in a weight-optimised manner, from CFK composite material and are each encased by means of a thin network of metallic material that is a good electrical conductor with a mesh width through which the microwave to be conducted does not escape in an unwanted manner.

7. Dimensionally stable hollow body structures or shell-like structures with in-built compact technical microwave system according to claims 4 and 6, **characterised in that** such a system is situated in the structures of the bows of a ship that are sprayed by spray, are in danger of icing-up and are facing the air flow.

8. Dimensionally stable hollow body structures or shell-like structures with in-built compact technical microwave system according to claims 4 and 6,
**characterised in that** such a system is situated in at least one of the aerodynamically important structures of the fronts of an aircraft, such as an aeroplane or a helicopter, that are facing the air flow and have to be kept ice-free.

9. Dimensionally stable hollow body structures or shell-like structures with in-built compact technical microwave system according to claim 8,
**characterised in that** such a system is situated in the regions that are relevant for the upward lift in the supporting surfaces behind the fronts that face the air flow.

10. Dimensionally stable hollow body structures or shell-like structures with in-built compact technical microwave system according to claims 8 or 9,
**characterised in that** such a system is situated in the regions that are relevant to the steering of the aeroplane in the vertical and/or lateral rudders behind the front that faces the air flow.

11. Dimensionally stable hollow body structures or shell-like structures with in-built compact technical microwave system according to claim 8 or 10,
**characterised in that** such a system is situated behind the ring-shaped front that faces the air flow of the driving mechanism housing at the air inlet of the driving mechanism.

12. Dimensionally stable hollow body structures or shell-like structures with in-built compact technical microwave system according to claim 9,
**characterised in that** such a system is built into the respective slat of the supporting surfaces.

13. Dimensionally stable hollow body structures or shell-like structures with in-built compact technical microwave system according to claim 9,
**characterised in that** such a system is built into a rotor blade of a wind turbine generator system.

## Revendications

1. Structures, stables en forme de cavités ou de coupelles, équipées d'un système de micro-ondes compact, intégré pour dégivrer et/ou éviter le givrage des surfaces extérieures exposées aux influences météorologiques,
les parois des structures creuses étant en matière composite thermoplastique ou thermodurcissable, durcie, ayant des propriétés diélectriques, le cas échéant en combinaison avec d'autres matériaux tels que des mousses dont les structures de fibres de carbone, de fibres de verre, de fibres de polymères, de fibres polyamides, de fibres de polyéthylène ou de fibres d'aramide, ont des surfaces extérieures exposées aux influences météorologiques, revêtues d'une peau, métallique comme protection contre la foudre et le système en technique micro-ondes se compose d'au moins une source de micro-ondes dont la puissance est commandée, de façon pulsée ou en continu dans la plage des fréquences comprises entre 900 MHz et 20 GHz,
**caractérisées en ce que**
au moins la partie frontale susceptible de givrer de la structure respective à une structure laminée, se composant d'une pièce de forme comme structure porteuse en une matière composite diélectrique adaptée au contraintes liées à la poussée et à la tenue en flexion et la peau métallique exposée directement à la veine d'air, en combinaison avec d'autres structures de construction, adjacentes ou jointives, ayant une surface extérieure métallique, sont reliées électriquement de façon à constituer une cavité à enveloppe métallique,
dans la cavité ou dans les chambres d'une telle pièce de forme, il est prévu au moins un système de micro-ondes susceptible de fonctionner seul, et se composant d'une source de micro-ondes avec une partie de réseau et une installation de découplage formée de guide d'onde et d'une structure de découplage,
la structure de découplage est disposée à l'intérieur de la pièce de forme le long de son front d'attaque extérieur de façon que les micro-ondes découplés se développent intérieurement le long de cette surface de la matière composite, libre, intérieure, se déployant avec un front d'onde ou pratiquement avec un front d'onde, matière composite dans laquelle l'onde pénètre et réchauffe la zone frontale correspondante du volume de matière composite par l'action du micro-ondes et le chauffage du volume de façon que la matière composite d'une part reste sous l'effet des micro-ondes à tout endroit, très largement en dessous de la température de délamination qui correspond à environ 130°C de la matière composite, et d'autre part, permet de laisser subsister au niveau de la surface de coupe de la pièce de forme/pellicule métallique, une densité surfacique de puissance, prédéterminée allant jusqu'à plus de 60 kW/m² pour de la glace accrochée, et qui maintient la peau métallique à une température prédéfinie, correspondant aux conditions météorologiques, et comprise entre +10°C et +70°C et une vitesse de dégivrage pour laquelle, sur le front attaqué longitudinalement, lorsque le système de micro-ondes est activé, garantit qu'il n'y aura pas de développement de givre ou que le givre ou la glace déposée au niveau de la face d'attaque, sur la surface de contact disparaîtra ou sera éliminée par le branchement du système de micro-onde.

2. Structures stables en forme de cavité ou de coupelle ayant un système de micro-ondes compact, intégré, selon la revendication 1,
**caractérisées en ce que**
la structure de découplage se compose d'un guide d'ondes fixé par brides à la source de micro-ondes ou aux sources de micro-ondes, ce guide d'onde ayant le long d'une surface enveloppe, des orifices de découplage dirigés vers l'arête d'attaque, et à partir desquels on découple respectivement des ondes qui se combinent au front d'ondes requis.

3. Structures stables en forme de cavités ou de coupelles comportant un système en technique micro-ondes compact, intégré, selon la revendication 2,
**caractérisées en ce que**
la source de micro-ondes est terminée par des circulateurs dans son amortissement de passage ou de blocage à la structure composite destinée au micro-ondes, et constituant l'utilisateur.

4. Structures stables en forme de cavités ou de coupelles comportant un système en technique micro-ondes, compact, intégré, selon la revendication 3,
**caractérisées en ce que**
la source de micro-ondes qui émet de façon monochromatique est orientée en fonction de la puissance à fournir dans la plage de fréquence prédéterminée d'un klystron ou d'un magnétron ou d'un oscillateur d'interaction étendue EIO.

5. Structures stables en forme de cavités ou de coupelles comportant un système en technique micro-ondes compact, intégré, selon la revendication 4,
**caractérisées en ce que**
les guides d'onde et les structures de découplage ont des parois métalliques bonnes conductrices d'électricité.

6. Structures stables en forme de cavité ou de coupelle comportant un système en technique micro-ondes compact, intégré, selon la revendication 4,
**caractérisées en ce que**
les guides d'onde et les structures de découplage sont fabriqués en aluminium léger ou en une matière composite CFK optimisée pondéralement, et qui sont entourées par un filet mince de matière métallique bonne conductrice d'électricité du côté maille, et à travers laquelle les micro-ondes éclairés ne se diffusent pas de manière accidentelle.

7. Structures stables en forme de cavités ou de coupelles comportant un système en technique micro-ondes compact, intégré, selon les revendications 4 et 6,
**caractérisées en ce qu'**
il se trouve dans les structures de façade d'un navire, risquant d'être givrées par l'air d'attaque et/ou pulvérisés par du givre.

8. Structures stables en forme de cavité ou de coupelles comportant un système en technique micro-ondes compact, intégré, selon les revendications 4 et 6,
**caractérisées en ce qu'**
il équipe au moins l'une des structures aérodynamiques importantes attaquées par l'air, pour tenir les parties avant dégagées de glace et qui font partie d'un appareil volant tel qu'un avion ou un hélicoptère.

9. Structures stables en forme de cavités ou de coupelles comportant un système en technique micro-ondes compact, intégré, selon la revendication 8,
**caractérisées en ce qu'**
il se trouve dans les zones caractéristiques de poussée ascensionnelle des surfaces portantes, derrière les parties avant attaquées par la veine d'air.

10. Structures stables en forme de cavité ou de coupelles comportant un système en technique micro-ondes compact, intégré, selon la revendication 8 ou 9,
**caractérisées en ce que**
le système équipe les zones caractéristiques servant au guidage d'un avion, dans les volets de profondeur et/ou la dérive, derrière les parties avant attaquées par la veine d'air.

11. Structures stables en forme de cavités ou de coupelles ayant un système de micro-ondes compact, intégré, selon la revendication 8 ou 10,
**caractérisées en ce que**
ce dispositif se trouve derrière la façade de forme annulaire attaquée par l'air de l'enveloppe du moteur, à l'entrée du moteur.

12. Structures stables en forme de cavités ou de coupelles comportant un système en technique micro-ondes compact, intégré, selon la revendication 9,
**caractérisées en ce qu'**
il est intégré dans les becs de bord d'attaque respective de la surface portante.

13. Structures stables en forme de cavité ou de coupelle comportant un système en technique micro-ondes compact, intégré, selon la revendication 9,
**caractérisées en ce qu'**
il est intégré dans la pale du rotor d'une éolienne.
